(19) Europäisches Patentamt

European Patent Office

Office européen des brevets

(11) **EP 0 671 323 B1**

(12) **FASCICULE DE BREVET EUROPEEN**

(45) Date de publication et mention
de la délivrance du brevet:
**02.06.1999 Bulletin 1999/22**

(51) Int. Cl.$^6$: **B64G 1/24**, B64G 1/32,
G05D 1/08

(21) Numéro de dépôt: **95400503.9**

(22) Date de dépôt: **09.03.1995**

(54) **Procédé adaptatif de contrôle d'attitude pour stabiliser magnétiquement un satellite au moins en roulis-lacet**

Adaptives Lagerregelungsverfahren für magnetische Stabilisierung eines Satelliten bezüglich der Roll- und der Gierachse

Adaptive attitude control method for magnetically stabilizing a satellite with repect to at least the roll-yaw axes

(84) Etats contractants désignés:
**DE ES GB IT NL**

(30) Priorité: **11.03.1994 FR 9402852**

(43) Date de publication de la demande:
**13.09.1995 Bulletin 1995/37**

(73) Titulaire:
**AEROSPATIALE Société Nationale Industrielle
75781 Paris Cédex 16 (FR)**

(72) Inventeurs:
• **Celerier, Bruno
F-06210 Mandelieu (FR)**
• **Douillet, Francis
F-06220 Vallauris (FR)**

(74) Mandataire: **Rinuy, Santarelli
14, avenue de la Grande Armée
75017 Paris (FR)**

(56) Documents cités:
**EP-A- 0 544 242**

• **TWENTIETH ASILOMAR CONFERENCE ON SIGNALS, SYSTEMS AND COMPUTERS, Décembre 1986, CALIFORNIA (USA) pages 487 - 492 BHATTI, A.A. 'MICROCOMPUTER BASED ADAPTIVE MAGNETIC ATTITUDE CONTROL OF A SPACECRAFT'**
• **JOURNAL OF GUIDANCE, CONTROL AND DYNAMICS, vol.16, no.6, Décembre 1993, NEW YORK US pages 1078 - 1084, XP000416724 PITTELKAU 'OPTIMAL PERIODIC CONTROL FOR SPACECRAFT POINTING AND ATTITUDE DETERMINATION'**
• **JOURNAL OF GUIDANCE, CONTROL AND DYNAMICS, vol.15, no.2, Avril 1992, NEW YORK US pages 325 - 333, XP000268305 BURNS ET AL. 'ADAPTIVE CONTROL APPLIED TO MOMENTUM UNLOADING USING THE LOW EARTH ORBITAL ENVIRONMENT'**
• **PROCCEDINGS OF THE NATIONAL SCIENCE COUNCIL, REPUBLIC OF CHINA (PART A), Novembre 1992, TAIWAN (CHINA) pages 456 - 464 CIANN-DONG YANG 'THA SAOSAT ATTITUDE CONTROL SYSTEM'**

## Description

L'invention concerne le contrôle d'attitude, notamment en roulis-lacet, à l'aide de générateurs de moment magnétique, d'un satellite destiné à être stabilisé selon trois axes sur une orbite terrestre. Elle vise de préférence, mais non exclusivement, le cas où l'orbite a une inclinaison intermédiaire (typiquement entre environ 15° et environ 75°).

L'utilisation de bobines magnétiques pour participer à la stabilisation en attitude d'un satellite en orbite autour de la Terre a déjà été proposée dans de nombreux documents parmi lesquels on peut citer :

- Reusable Reentry Satellite (RRS) System Design Study Appendix E : Attitude Control System Study
  Ithaco Incorporated, Ithaca, New York
  NASA STAR Technical report issue 04
- Magnetic attitude control system for spinning small spacecraft par PAL, PARIMAL, SELBY, VAUGHN H.
  Ithaco Incorporated, Ithaca New York
  NASA IAA Conference paper issue 10
- Development of magnetic attitude control system of ETS-III par IMAI F., SHIMIZU J.
  National space Development Agency of Japan, Tokyo NASA IAA Conference paper, issue 18
- An elementary magnetic attitude control system par STICKLER A.C., ALFRIEND K.T.
  Ithaco Incorporated, Ithaca, New York - Naval Research Laboratory, Washington D.C.
  AIAA, Mechanics and control flight conference, Anaheim, California/August 5-9, 1974
- Magnetic roll/yaw attitude control of a momentum biased near polar satellite par BRUBERLE E., REINDLET A.
  Messerschmitt Bölkow Blohm GmbH, Ottobrunn, Germany IFAC/ESA symposium on automatic control in space, Noordwijkerhout, The Netherlands 5-9 July 1982
- Autonomous spacecraft attitude control using magnetic torquing only par MUSSER K.L., EBERT W.L.
  The Johns Hopkins University Applied physics laboratory, Laurel Maryland
  In NASA, Goddard Space Flight Center, Flight Mechanics/Estimation Theory Symposium, 1989 pp 23-38.

Dans ces documents, soit les bobines sont utilisées à de simples fins d'amortissement, soit elles n'interviennent que pour désaturer les roues cinétiques qui assurent le contrôle d'attitude, soit elles interviennent en tout ou rien (soit, en variante, en tout "positif", en tout "négatif" ou en rien ; les bobines servent alors à désaturer les roues), soit combinent des valeurs du champ magnétique en roulis et des dérivées de valeurs du champ magnétique en tangage, soit se placent dans des hypothèses très restrictives (par exemple condition $B\theta = 0$). Le document de MUSSER et EBERT propose quant à lui un procédé de contrôle d'attitude par bobines magnétiques, mettant en oeuvre une modulation du courant circulant dans les bobines ; cette solution est tout à fait performante mais présente l'inconvénient de nécessiter de disposer d'un modèle complet du champ terrestre et connaître avec précision l'orbite et la position du satellite ; d'autre part, elle ne peut pas tenir compte des écarts du champ magnétique terrestre réel par rapport à ce modèle, ni de faire face au moindre orage magnétique.

On peut également citer les documents suivants :

- US-4.916.622 qui nécessite une roue d'inertie capable de pivoter,
- US-4.489.383 qui se limite à des orbites fortement inclinées et n'active les bobines magnétiques que de manière intermittente (sur un quart d'orbite sur deux),
- US-4.807.835 qui nécessite l'emploi d'un mât de gravité et n'utilise des bobines magnétiques qu'à des fins d'amortissement,
- FR-2.498.155 qui se limite à amortir la nutation,
- FR-2.319.150 qui se limite au cas d'orbites synchrones,
- FR-2.525.359, qui concerne la désaturation d'un moment cinétique embarqué dans le plan roulis-lacet,
- FR-2.525.360, qui nécessite la détermination d'un couple extérieur perturbateur que l'on veut compenser,
- FR-2.525.361, qui fait intervenir un signal de polarité magnétique et un organe de lissage,
- EP-0.544.242 qui vise à compenser des perturbations magnétiques,
- US-5.047.945 qui nécessite la connaissance d'un modèle du champ magnétique terrestre et vise la compensation du champ magnétique résiduel du satellite.

On connaît par ailleurs, d'après JOURNAL OF GUIDANCE, CONTROL AND DYNAMICS, Vol 16, N° 6, Décembre 1993, New-York, US, pages 1078-1084, XP000416724, PITTELKAV 'OPTIMAL PERIODIC CONTROL FOR SPACECRAFT POINTING AND ATTITUDE DETERMINATION, un procédé nécessitant un modèle du champ magnétique terrestre, des moyens de calcul importants, et limité au cas de satellites en orbite polaire ; ce procédé fait intervenir des gains variant périodiquement au cours du temps.

L'invention a pour objet de pallier les inconvénients précités grâce à un procédé et un dispositif de contrôle

2

d'attitude, au moins en roulis-lacet, utilisant l'interaction de générateur(s) de moment magnétique avec le champ magnétique terrestre, permettant d'obtenir une bonne précision de pointage avec toutefois une faible masse, un faible coût, une grande durée de vie grâce à sa simplicité et à sa fiabilité, tout en étant capables de s'adapter à des variations de ce champ magnétique.

L'invention propose à cet effet un procédé de contrôle de l'attitude d'un satellite devant être stabilisé selon des axes de roulis, de tangage et de lacet, selon lequel, pour le contrôle en roulis-lacet :

- on détermine l'orientation instantanée dans le plan roulis-lacet de la direction instantanée $\vec{d}$ définie par le produit vectoriel unitaire $\vec{Y}$ de l'axe de tangage avec le champ magnétique terrestre local $\vec{B}$,
- on détermine des grandeurs d'attitude en roulis-lacet du satellite,
- on détermine l'amplitude et le sens d'un couple de correction Cmxz à appliquer au satellite selon ladite direction, cette amplitude étant déterminée à partir desdites grandeurs d'attitude en roulis-lacet selon une loi de commande prédéterminée dont les gains sont élaborés de façon adaptative en sorte de respecter des conditions prédéterminées sur les pôles du système modélisant la dynamique du satellite dans le plan roulis-lacet,
- on génère dans un plan perpendiculaire à cette direction instantanée un moment magnétique d'amplitude propre à générer selon ladite direction ledit couple de correction Cxz par interaction avec le champ magnétique terrestre, grâce à quoi ce couple de correction du roulis-lacet n'a aucune composante en tangage.

Selon des dispositions préférées de l'invention :

- les conditions prédéterminées sur les pôles du système sont des conditions de sensible constance au cours du temps,
- lesdits gains sont élaborés par interpolation à partir de données stockées à bord et d'au moins l'orientation de la composante Bxz du champ magnétique terrestre instantané dans la plan roulis-lacet,
- lesdits gains sont élaborés à partir de coefficients de FOURIER stockés à bord et de la valeur instantanée de l'orientation de la composante Bxz du champ magnétique terrestre local dans le plan roulis-lacet,
- la loi de commande est du type proportionnel/dérivée, les grandeurs d'attitude sont les angles et les vitesses angulaires en roulis-lacet, et les gains sont au nombre de quatre,
- la loi de commande est du type proportionnel/intégral, les grandeurs d'attitude sont les angles en roulis-lacet et leurs intégrales et les gains sont au nombre de quatre,
- la loi de commande est du type proportionnel/intégral/dérivée, les grandeurs d'attitude sont les angles en roulis-lacet et leurs vitesses et leurs intégrales, et les gains sont au nombre de six,
- les pôles auxquels sont appliquées les conditions prédéterminées sont caractérisés par les grandeurs $\zeta_i$ et $\omega_i$ telles que le polynôme caractéristique du système puisse s'écrire sous la forme d'un produit de <u>n</u> termes :

$$x^2 + 2\zeta_i\,\omega_i x + \omega_i^2$$

où i est compris entre 1 (inclus) et n (inclus),
- les pôles sont choisis en sorte que les grandeurs $\omega_i$ sont supérieures d'au moins un ordre de grandeur à la pulsation orbitale,
- on détermine l'amplitude de la composante Bxz et on détermine l'amplitude du moment magnétique, noté My, par division de l'amplitude du couple de correction par cette amplitude de la composante Bxz, et on génère ce moment magnétique My selon l'axe de tangage,
- on détermine l'amplitude |B| du champ magnétique terrestre B, et on génère le moment magnétique, noté Mb, perpendiculairement au champ magnétique terrestre, tel que :

$$Mb = \frac{B \wedge Cmxz}{|B|^2}$$

- en outre, on contrôle l'attitude en tangage par modification de la vitesse de rotation d'une roue d'inertie en tangage,
- on génère des couples en tangage de désaturation de la roue d'inertie par activation d'au moins un générateur de moment magnétique générant un moment magnétique dans le plan roulis-lacet,
- on contrôle l'attitude en tangage par génération dans le plan roulis-lacet d'un moment magnétique d'amplitude déterminée en fonction des mesures d'attitude en tangage,
- on génère ce moment magnétique dans le plan roulis-lacet selon ladite direction instantanée,
- on détermine les grandeurs d'attitude par détection à l'aide de détecteurs terrestre, solaire et/ou stellaire, de gyroscopes ou de gyromètres, et/ou estimation à l'aide de filtres estimateurs,

- on détermine certaines ou moins des grandeurs d'attitude par comparaison de mesures, selon un ou plusieurs axes, du champ magnétique terrestre instantané avec un modèle de ce champ magnétique terrestre,
- on détermine le champ magnétique terrestre au moins en roulis-lacet par mesure à l'aide d'au moins un magnétomètre à un ou plusieurs axes de mesure,
- on détermine au moins l'orientation du champ magnétique terrestre en roulis-lacet à partir de signaux reçus du sol,
- on détermine au moins l'orientation du champ magnétique terrestre local en roulis-lacet à partir d'un modèle de ce champ,
- le satellite suit une orbite d'inclinaison comprise entre 15° et 75° environ.

L'invention propose également un satellite stabilisé en roulis, en tangage et en lacet, comportant un dispositif de contrôle d'attitude en roulis-lacet comportant :

- un premier dispositif de détermination d'au moins l'orientation du champ magnétique terrestre local instantané en roulis-lacet Bxz,
- un deuxième dispositif de détermination d'attitude pour fournir des signaux d'attitude au moins en roulis et en lacet,
- un calculateur connecté aux premier et second dispositifs, contenant une loi de commande adaptative à gains variables donnant une valeur de couple de correction en roulis/lacet à appliquer perpendiculairement à l'axe de tangage et à l'orientation instantanée de Bxz à partir des signaux d'attitude, et une loi donnant lesdits gains variables en fonction d'au moins l'orientation de Bxz,
- un générateur de moment magnétique adapté à générer, dans le plan de l'axe de tangage et de Bxz, un moment magnétique propre à générer par interaction avec le champ magnétique terrestre ladite valeur de couple à appliquer.

Les dispositions préférées précitées s'appliquent, mutatis mutandis à ce satellite et à son dispositif de contrôle d'attitude.

On appréciera que l'invention :

- permet de réaliser le contrôle du roulis-lacet sans exercer de couple en tangage,
- laisse la possibilité de contrôler aussi le tangage par actionnement magnétique,
- ne nécessite pas de moment cinétique pivotant,
- ne se limite pas ni aux orbites fortement inclinées, ni aux orbites faiblement inclinées,
- n'a pas besoin de mât de gravité,
- n'a pas besoin ni de roues de réaction, ni de roue cinétique dont l'axe de rotation a une composante non nulle dans le plan roulis-lacet, ni de tuyères,
- n'a pas besoin de prévoir un retard avant d'appliquer la commande,
- n'a pas besoin de déterminer un éventuel moment perturbateur extérieur, et ne se limite pas à la compensation de couples perturbateurs,
- n'exige pas la prévision du champ magnétique, ni donc la connaissance d'un modèle de ce champ magnétique sur toute l'orbite (la connaissance ponctuelle de ce champ suffit),
- n'exige pas la connaissance à bord de la position du satellite sur son orbite.

Des objets, caractéristiques et avantages de l'invention ressortent de la description qui suit, donnée à titre d'exemple non limitatif, en regard des dessins annexés sur lesquels :

- la figure 1 est une présentation dans l'espace d'un repère lié à un satellite et de divers vecteurs intervenant dans le contrôle d'attitude au moins en roulis-lacet, conformément à l'invention,
- la figure 2 est un schéma de principe du procédé de contrôle d'attitude en roulis-lacet de l'invention,
- la figure 3 est un groupe de six graphiques représentant les évolutions en fonction du temps des angles de roulis, tangage et lacet et des coordonnées du vecteur rotation instantanée du satellite, en simulation selon l'invention et en l'absence de tout couple perturbateur,
- la figure 4 est un groupe de quatre graphiques représentant les évolutions en fonction du temps des quatre gains en roulis, lacet correspondant à la simulation de la figure 3,
- la figure 5 est un groupe de six graphiques analogue à la figure 3, mais selon une simulation prenant en compte des couples perturbateurs,
- la figure 6 est un groupe de quatre graphiques analogue à celui de la figure 4, montrant les évolutions des gains adaptatifs,

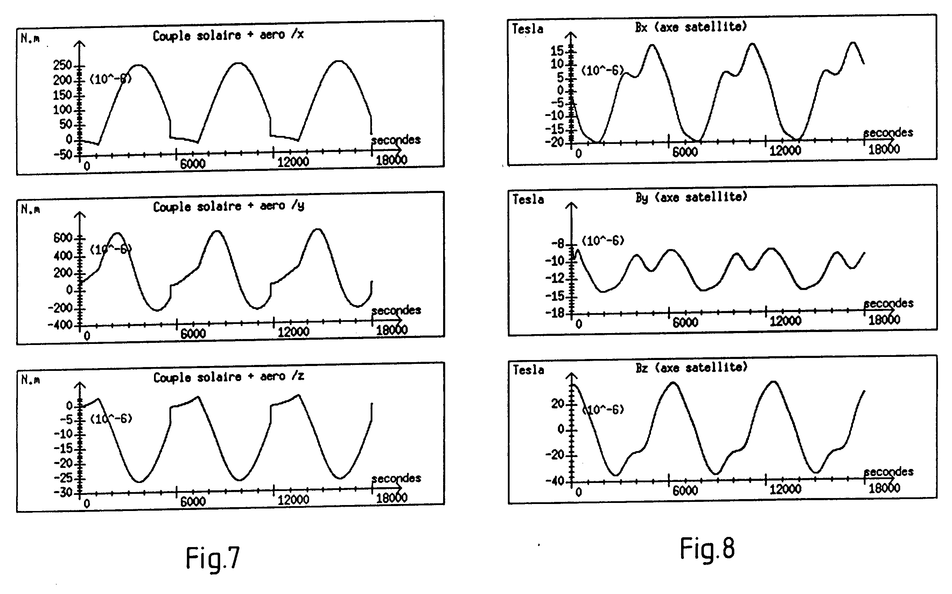

- la figure 7 est un groupe de trois graphiques montrant les composantes selon les trois axes des couples perturbateurs pris en considération, d'origine aérodynamique et solaire, et

- la figure 8 est un groupe de trois graphiques montrant les évolutions au cours du temps (le long de l'orbite) des composantes selon les trois axes du champ magnétique terrestre instantané que subit le satellite.

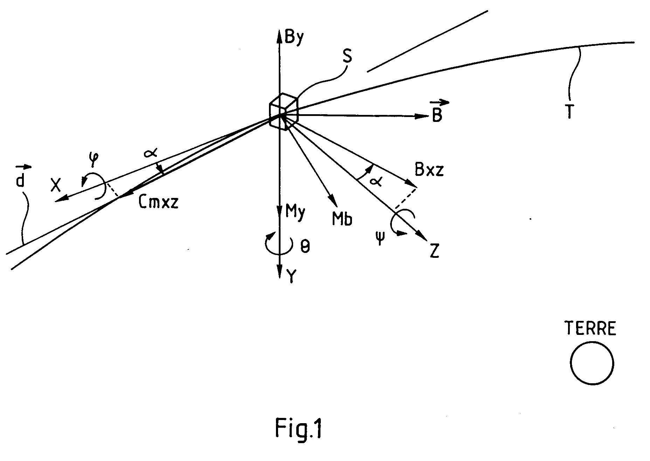

La figure 1 représente un repère XYZ lié au satellite S que l'on veut stabiliser en attitude, au moins en roulis-lacet. Les axes X, Y et Z ont leurs significations habituelles, en ce sens que :

- X est l'axe de roulis,
- Y est l'axe de tangage, normalement perpendiculaire au plan orbital, c'est-à-dire au plan roulis-lacet,
- Z est l'axe de lacet, normalement dirigé vers le centre de la Terre,

avec les précisions suivantes :

* le repère X Y Z est direct
* X, qui est normalement contenu dans le plan roulis-lacet, est orienté dans le même sens que la vitesse instantanée du satellite sur son orbite T ; X est normalement tangent à l'orbite lorsque celle-ci est circulaire.

On se préoccupe dans ce qui suit, dans un premier temps, du contrôle d'attitude en roulis-lacet.

On appelle $\varphi$ et $\psi$ les angles de roulis et de lacet, c'est-à-dire les erreurs angulaires que peut présenter l'attitude du satellite autour des axes X et Z par rapport à son attitude de consigne définie ci-dessus par rapport à l'orbite et à la Terre.

Le contrôle d'attitude en roulis-lacet est, selon l'invention, réalisé au moyen d'une bobine magnétique orientée en tangage, c'est-à-dire d'axe actif parallèle à l'axe Y, ou plus généralement au moyen d'un générateur de moment magnétique dont l'axe magnétique actif, éventuellement variable, est dans le plan de cet axe Y et du champ magnétique terrestre B.

Soit My le moment magnétique généré par cette bobine (il est donc orienté selon Y) et Mb le moment magnétique généré dans le plan (Y, B) par ce générateur de moment magnétique.

On s'intéresse d'abord au cas de la bobine orientée en tangage.

L'interaction de My avec la composante en tangage du champ magnétique terrestre local se traduit par un couple nul puisque, comme on le sait, l'interaction entre deux champs ou moments magnétiques est un couple égal au produit vectoriel de ces champs/moments.

Par contre My interagit avec la composante Bxz du champ magnétique terrestre dans le plan roulis-lacet, en sorte de générer magnétiquement un couple Cmxz, parallèle au plan roulis-lacet, perpendiculaire à My et Bxz et de module égal au produit des modules de ces derniers puisque ceux-ci sont perpendiculaires entre eux.

Si l'on s'intéresse maintenant au cas général d'un moment magnétique Mb généré dans le plan (Y, B) on constate que l'interaction de ce moment magnétique avec Bxz aboutit à un couple ayant la même direction que précédemment mais on comprend qu'en outre l'interaction de Mb avec la composante en tangage By du champ magnétique terrestre aboutit aussi à un couple ayant cette direction. Plus généralement l'interaction de Mb avec B est un couple Cmxz donné par :

$$Cmxz = Mb \wedge B$$

Un cas particulier de cette solution générale est le cas précité où le moment magnétique est parallèle à Y (il suffit alors d'une seule bobine)

Un autre cas particulier intéressant est celui où l'on choisit de donner à Mb une orientation, dans le plan (Y, B), perpendiculaire à B (l'efficacité est alors maximale) ; le module de Cmxz est alors donné par le produit des modules de Mb et de B.

Un autre cas consiste par exemple à fixer Mb dans le plan roulis-lacet, c'est-à-dire parallèle à Bxz (seules des bobines (ou équivalents) en roulis-lacet sont alors requises).

Soit $\alpha$ l'angle que fait avec l'axe de roulis X la direction instantanée $\vec{\partial}$ définie par le produit vectoriel du vecteur unitaire Y de l'axe de tangage avec le champ magnétique terrestre local ; c'est aussi l'angle que fait Bxz avec l'axe de lacet Z.

Il est important de noter que l'orientation de Bxz détermine l'orientation de Cmxz ; si Bx et Bz sont les composantes en roulis et en lacet (axes X et Z du satellite) du champ magnétique terrestre local et si on compte positivement $\alpha$ autour de -Y, on a

$$\alpha = Arc\ tg\ (-Bx/Bz)$$

Ainsi que cela apparaîtra plus loin, l'invention prend en considération, dans les équations de contrôle d'attitude au moins en roulis-lacet, le fait que tous les couples réalisables dans le plan roulis-lacet à un instant donné par interaction de Mb avec le champ magnétique terrestre sont nécessairement dans la direction $\vec{d}$ définie ci-dessus par l'angle $\alpha$ (les couples peuvent bien sûr être négatifs et donc être en sens inverse de $\vec{d}$).

La deuxième équation de la dynamique, appliquée au système constitué par le satellite pris dans son environnement permet d'écrire (en écriture vectorielle) en tenant compte du fait que les efforts extérieurs sont la somme d'un couple perturbateur Cp (en principe inconnu) et d'un couple de commande Cm (à déterminer) :

$$I\dot{\Omega} + \dot{H} + \Omega\wedge I\Omega + \Omega\wedge H = Cp + Cm$$

où

$\Omega$     est le vecteur rotation instantanée du satellite dans son repère,
I     est la matrice d'inertie du satellite,
H     est le moment cinétique (éventuel) embarqué au sein du satellite ; il s'agit par exemple d'une roue cinétique d'orientation fixe, orientée de préférence selon l'axe de tangage.

On sait que l'équation dynamique vectorielle précitée à trois composantes peut se décomposer en une équation dynamique matricielle à deux composantes dans le plan roulis-lacet (correspondant à un système de deux équations scalaires) et une équation en tangage. On s'intéresse dans ce qui suit à l'équation dans le plan roulis-lacet ; celle-ci peut s'écrire, en linéarisant au premier ordre les petits angles, sous la forme :

$$A\ddot{X} + B\dot{X} + DX = Cpxz + Cmxz$$

où :

.     Cpxz est la composante du couple perturbateur dans le plan roulis-lacet,
.     Cmxz est la composante du couple de contrôle dans le plan roulis-lacet (l'indice "m" rappelant ici que, comme indiqué ci-dessous, ce couple est d'origine magnétique),
.     X est le vecteur colonne formé des angles $\varphi$ et $\psi$ de roulis et de lacet,
.     A, B et D sont des matrices de coefficients caractérisant le satellite, notamment en inertie.

Compte tenu de ce que l'on connaît l'orientation dans laquelle on exerce le couple Cmxz de contrôle on peut écrire ce couple Cmxz en projection dans le plan roulis-lacet sous la forme :

$$Cmxz = C.\begin{bmatrix} \cos\ \alpha \\ \sin\ \alpha \end{bmatrix}$$

où C est un scalaire (correspondant au module du vecteur Cmxz de la figure 1).

On peut choisir a priori la forme de la loi de commande donnant Cmxz en fonction de X, ainsi que de sa dérivée $\dot{X}$ et/ou de sont intégrale $\int X$.

Une commande de type proportionnel/dérivée revient à écrire :

$$C = Kc.X + Lc.\dot{X}$$

où Kc est une matrice ligne de gains $k_1$ et $k_2$ et où Lc est une matrice ligne de gains $\ell_1$ et $\ell_2$, l'indice 1 correspondant aux gains en roulis et l'indice 2 correspondant aux gains en lacet.

Si l'on choisissait une loi de commande de type proportionnel/intégrale, on écrirait :

$$C = Kc.X + Nc.\int X$$

où les matrices Kc et Nc seraient de même deux matrices lignes de gains $k_1$, $k_2$, $n_1$, $n_2$.

Si on choisit une loi de commande de type PID (proportionnel/intégrale/dérivée) on ferait intervenir six coefficients $k_1$, $k_2$, $\ell_1$, $\ell_2$, $n_1$ et $n_2$.

Bien entendu la loi de commande est d'autant plus simple que le nombre de coefficients ou gains est faible, en pratique égal à 4.

Dans le cas de la loi de commande proportionnel/dérivée on peut écrire l'équation dynamique précitée sousla forme :

$$A \ddot{X} + B'\dot{X} + D'X = Cpxz$$

en intégrant dans B' et D' les coefficients de $\dot{X}$ et de X dans l'expression du couple Cmxz.

Si l'on choisit une loi de commande faisant intervenir l'intégrale de X, on aurait dans le membre gauche de l'équation dynamique un quatrième terme par exemple noté F. Cela explique que, pour des raisons de simplicité de l'équation, on préfère utiliser ici une loi de type proportionnel/dérivée.

Selon un aspect important de l'invention, on fait varier les divers gains au cours du temps selon un critère prédéterminé approprié, tenant compte des valeurs instantanées des composantes en roulis-lacet du champ magnétique terrestre, ou de $\alpha$ et du module de Bxz défini précédemment.

C'est pourquoi on peut dire que la loi de commande utilisée est une loi adaptative.

De manière préférée, l'élaboration des gains se fait à partir de choix sur les pôles de l'équation dynamique du système, c'est-à-dire sur les racines de son équation caractéristique.

Ainsi qu'on le sait, l'équation caractéristique du système est un polynôme dont l'ordre $\underline{n}$ dépend de l'ordre de l'équation différentielle considérée (égal à 2 si la loi de commande ne comporte que des termes proportionnels dérivés, égal à 3 si la loi de commande comporte un terme intégral) et du nombre de composantes du vecteur X considéré (2 si l'on ne s'intéresse qu'au système dans le plan roulis-lacet). En fait $\underline{n}$ est le produit des valeurs précitées. Il est à noter que le nombre $\underline{n}$, c'est-à-dire le nombre de pôles ou de racines, peut être différent du nombre de gains de la loi de commande (cas d'une loi de commande de type proportionnel/intégral ou dévrivée/intégral). Ces pôles sont généralement des valeurs complexes, mais il existe toutefois des grandeurs intermédiaires qui ont l'avantage d'être toujours réelles et d'avoir une signification physique.

Plus précisément, au moins dans le cas de la loi de commande de type proportionnel/dérivée appliqué au contrôle roulis-lacet, on peut écrire le polynôme caractéristique sous la forme :

$$P = (x^2 + 2\zeta_1 \omega_1 x + \omega_1^2)\ (x^2 + 2\zeta_2 \omega_2 x + \omega_2^2)$$

Les grandeurs intermédiaires sont des pulsations $\omega_1$ et $\omega_2$ et des amortissements $\zeta_1$ et $\zeta_2$.

Dans le cas où il y a six pôles, on utilise des grandeurs supplémentaires $\omega_3$ et $\zeta_3$.

Les pulsations $\omega_1$ et $\omega_2$ seront choisies d'autant plus grandes que l'on veut réagir vite (commande "nerveuse"), tandis que les amortissements $\zeta_1$ et $\zeta_2$ seront choisis d'autant plus grands que l'on veut amortir rapidement les mouvements.

En particulier, on peut donner à ces grandeurs des valeurs constantes au cours du temps.

En variante, on peut les faire évoluer en fonction de la position du satellite sur son orbite.

Pour assurer une bonne stabilité du système lorsque $\alpha$ varie, les pulsations $\omega_1$ et $\omega_2$ sont de préférence choisies très supérieures à la pulsation orbitale $\omega_o$ (par exemple 10 à 100 fois plus grands). Cela conduit à un bon découplage en fréquence de l'évolution des gains de commande d'une part et de l'évolution de l'attitude du satellite d'autre part.

A partir de la donnée de ces pulsations et amortissements, donc des pôles, on peut déterminer les coefficients du polynôme caractéristique et en déduire les valeurs instantanées à donner aux gains $k_1$, $k_2$, $\ell_1$ et $\ell_2$ (voire les autres gains s'il y en a plus que 4), ce qui donne la valeur instantanée C à réaliser dans la direction $\vec{d}$ par la relation $C = k_1.\varphi + \ell_1.\dot{\varphi} + k_2.\Psi + \ell_2.\dot{\Psi}$ puis, en fonction de la direction du plan (Y, B) dans laquelle on a choisi de générer le moment magnétique, en déduire l'amplitude de ce dernier.

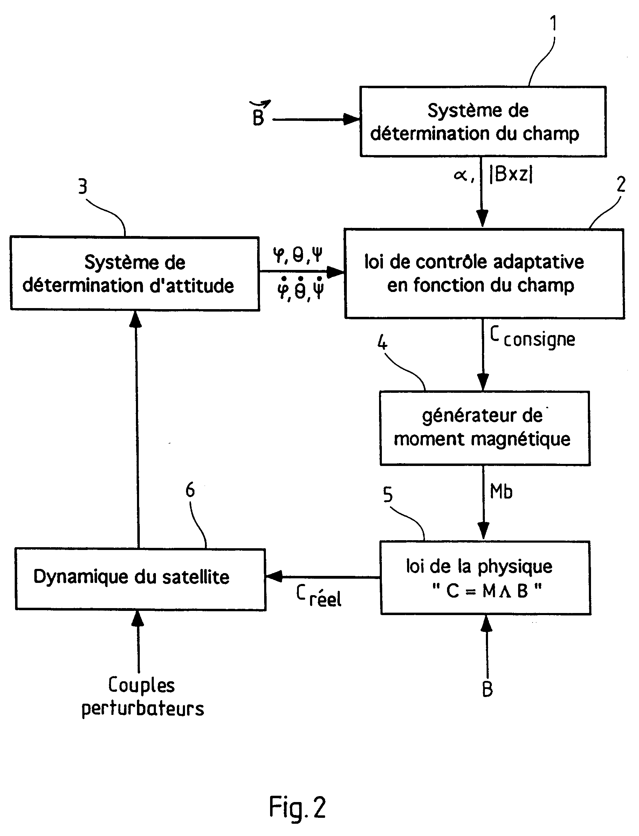

Ainsi que cela est schématisé à la figure 2, le contrôle d'attitude en roulis-lacet comporte donc les étapes suivantes, avec une loi de commande proportionnel/dérivé :

- mesure en 1 des valeurs instantanées de Bx et de Bz (ou directement de Bxz) à l'aide de magnétomètres de tout type connu approprié, et identification de $\alpha$,
- détermination en 2, à partir de la connaissance des caractéristiques dynamiques du satellite (A, B, D) et de la donnée des caractéristiques imposées au contrôle (contraintes imposées à $\zeta_1$, $\zeta_2$, $\omega_1$, $\omega_2$ ou aux racines proprement dites du polynôme caractéristique P), des valeurs instantanées des gains de $k_1$, $k_2$, $\ell_1$, $\ell_2$, c'est-à-dire des matrices lignes de la loi de commande,
- détermination en 2 également, à partir de la mesure en 3 par tout système connu approprié de détection d'attitude en roulis-lacet (détecteurs terrestre, solaire voire stellaire et/ou gyroscopes et/ou filtres estimateurs voire réception depuis une source extérieure) des angles et des vitesses à corriger en roulis et en lacet (c'est-à-dire à partir de la connaissance de X et $\dot{X}$ ) du couple Cmxz à obtenir en roulis-lacet (couple de consigne),

- détermination en 4 du moment magnétique My à générer selon Y, ou plus généralement de Mb,
- et réalisation en 4 de ce moment qui, par interaction en 5 avec le champ magnétique terrestre B, génère un couple réel, d'où une réaction en attitude du satellite détectée en 3 et venant ainsi fermer la boucle du système, via la dynamique du satellite 6.

Ce cycle d'opérations avec observation des valeurs instantanées de Bxz, et des nouvelles valeurs d'attitude compte tenu de la réaction du satellite au moment My généré et interagissant avec le champ magnétique terrestre assure le contrôle de l'attitude du satellite.

La détermination de la projection du champ magnétique terrestre instantané (ou courant) dans le plan roulis-lacet peut être faite par mesure (voir ci-dessus) mais aussi à l'aide d'un modèle mathématique ou par combinaison de mesures et de ce modèle. Il est rappelé que la direction de cette projection est variable et fait un tour par orbite. Il en est de même pour la direction $\vec{d}$ dans laquelle il est possible de générer un couple magnétique purement dans le plan roulis-lacet.

Il est à noter que cette direction est unique dans le cas des orbites inclinées par rapport à l'équateur magnétique, et que dans le cas d'une orbite non inclinée par rapport à cet équateur on peut réaliser un couple purement dans le plan roulis-lacet dans n'importe quelle direction de ce plan, l'invention n'est donc pas limitée à ce cas particulier.

Pour déterminer les gains de contrôle en roulis, en lacet, en vitesse de roulis et en vitesse de lacet (dans le cas d'une loi de contrôle de type proportionnel/dérivée, mais ce qui suit se généralise aisément à toute autre loi) on identifie les coefficients du polynôme caractéristique du système contrôlé, calculés avec les quatre gains de retour comme paramètres, avec les coefficients du polynôme caractéristique désiré, correspondant aux pôles choisis, puis on résoud le système de quatre équations ainsi obtenues, avec pour inconnues les quatre gains de contrôle.

En pratique les gains peuvent être calculés à bord par interpolation de plusieurs valeurs de gains stockées à bord, précalculées au sol pour plusieurs valeurs de $\alpha$. Les gains peuvent aussi être calculés au sol et transmis au satellite en vol.

On peut également calculer au sol les principaux coefficients de FOURIER de chacun des quatre gains en fonction de $\alpha$ et les stocker à bord, dans ce cas, on peut alors reconstituer chaque gain à bord en fonction de l'angle $\alpha$ courant et des coefficients stockés (en pratique les cinq premiers coefficients suffisent).

Pour ce qui est du contrôle complémentaire en tangage, celui-ci est par exemple réalisé à l'aide d'une roue cinétique en tangage (cas envisagé ci-dessus) dont la vitesse est modifiée pour compenser les variations d'attitude en tangage.

En temps utile, voire en permanence, la désaturation de cette roue peut être réalisée à l'aide de bobines magnétiques agissant dans le plan roulis-lacet (par exemple une bobine en roulis et une bobine en lacet) en sorte de générer, par interaction avec la composante en roulis-lacet de champ magnétique terrestre, le couple Cy de désaturation souhaité.

En variante, on peut laisser la roue d'inertie (si elle existe, ce qui est de préférence le cas pour assurer une stabilisation gyroscopique de l'axe de tangage) tourner à une vitesse constante et générer les couples de correction en tangage à l'aide des bobines magnétiques précitées disposées dans le plan roulis-lacet.

Pour assurer une efficacité maximale de ce contrôle ou de cette désaturation en tangage les bobines magnétiques du plan roulis-lacet sont de préférence commandées en sorte de générer un moment magnétique qui est perpendiculaire à Bxz ; il existe toutefois une possibilité d'interaction avec le champ magnétique en tangage qui provoque un couple perturbateur dans le plan roulis-lacet. Le contrôle ou la désaturation en tangage perturbe donc le roulis-lacet, mais le contrôle du roulis-lacet ne perturbe pas le tangage, ainsi il n'y a pas de possibilité de rebouclage des perturbations susceptible de déstabiliser le système complet (roulis-lacet et tangage).

La loi de commande pour le contrôle en tangage peut être de tout type (proportionnel/dérivée, intégral/dérivée ou proportionnel/intégral/dérivée) avec des gains éventuellement constants ; toutefois, de manière préférée, les gains sont variables en sorte de respecter une contrainte sur les pôles (ou les pulsation et amortissement), par exemple une contrainte de constance.

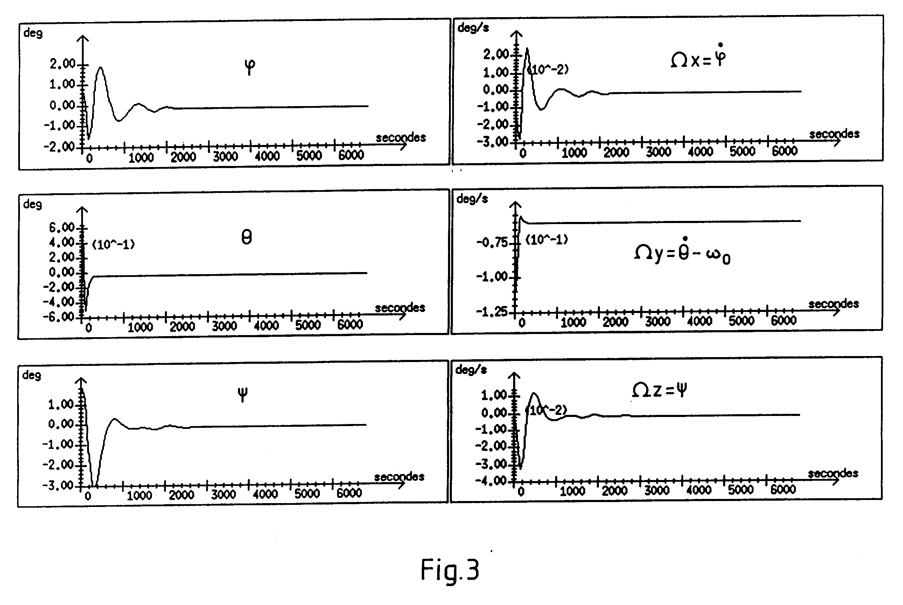

Des résultats de simulation sont présentés aux figures 3 à 6 qui correspondent aux données numériques suivantes :

| - altitude | 900 km |
|---|---|
| - inclinaison de l'orbite | 65° |
| - $\omega_o$ | 2Π/6000 |

8

(suite)

| - période orbitale | 6000 secondes |
|---|---|
| - $\omega_1$ et $\omega_2$ | 0,004 et 0,01 rd/sec |
| - $\zeta_1$ et $\zeta_2$ | 1 et 1,1 |
| - moment cinétique en Y | 30 N.m.s |
| - désaturation du moment cinétique en tangage par des bobines en X et Z | |
| - matrice d'inertie diagonale du satellite - éventuels couples perturbateurs selon figure 7 | |
| - modèle de champ magnétique d'ordre 8 (8 harmo niques sphériques) | |
| - conditions initiales : | $\varphi_o = 0{,}5°$ |
| | $\theta_o = 1°$ |
| | $\psi_o = 1{,}5°$ |

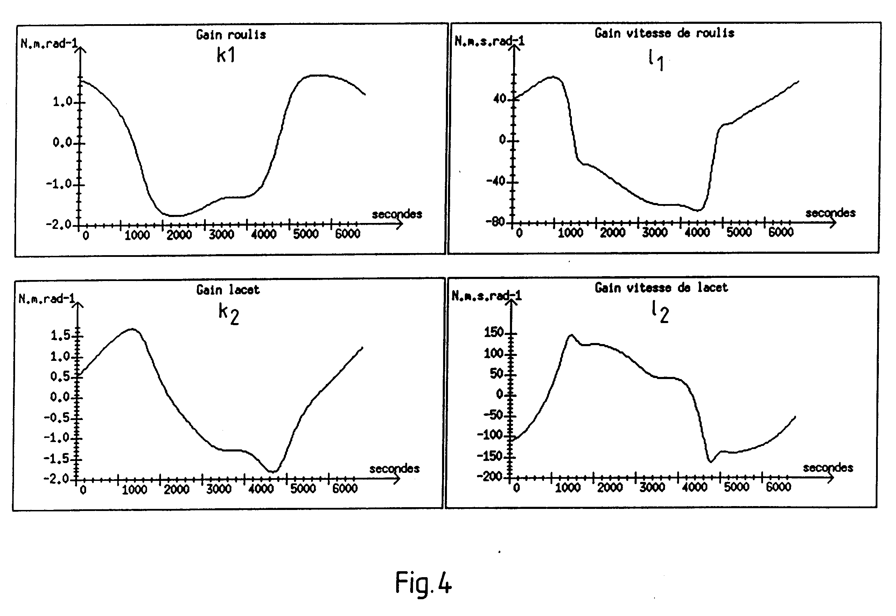

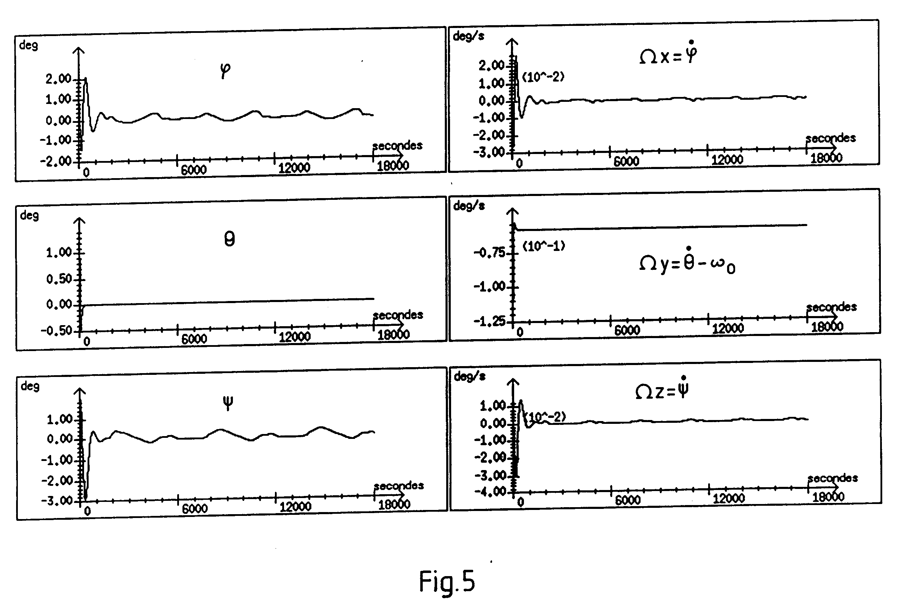

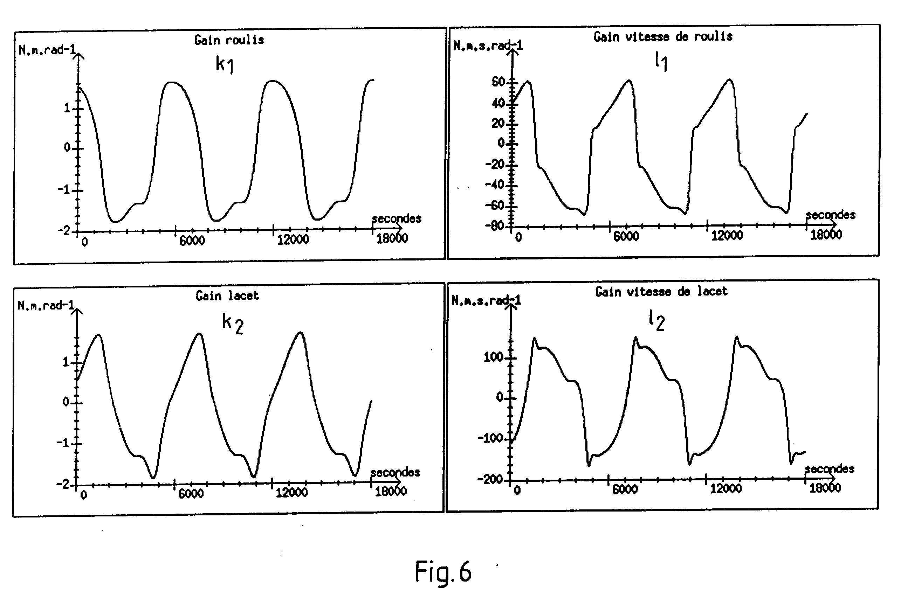

La comparaison des figures 3 et 4 (sans couples perturbateurs) aux figures 5 et 6 (avec couples perturbateurs) montre la capacité du procédé de contrôle à supporter des couples perturbateurs importants.

Vis à vis des solutions antérieures, l'invention élargit considérablement le champ d'application des systèmes de contrôle d'attitude magnétique :

- aux orbites ni quasi-polaires, ni quasi-équatoriales,
- aux satellites naturellement très instables, en particulier à cause du gradient de gravité (par exemple à cause d'un terme croisé roulis-lacet important dans la matrice d'inertie).
     Ainsi, l'invention permet :
- d'éviter l'adjonction de roues cinétiques ou à réaction dans le plan roulis-lacet,
- de se passer d'un système propulsif pénalisant en terme de masse et limitant la durée de vie,
- de se dispenser d'une stabilisation passive par gradient de gravité, également pénalisante en masse, moins précise, et difficilement applicable aux moyens et gros satellites,
- d'éviter les interruptions de commande deux quarts d'orbite sur 4 qui laissent dériver l'attitude du satellite 50 % du temps, dégradant ainsi le pointage,
- de ne demander que des calculs simples (permet de se dispenser d'un modèle embarqué de champ magnétique),
- de s'adapter au champ magnétique local réel, conférant ainsi une grande robustesse,
- de maîtriser les caractéristiques dynamiques du système et ainsi garantir une excellente stabilité et une bonne précision de pointage malgré des perturbations importantes.

On peut résumer que le système représentant la dynamique des axes roulis et lacet d'un satellite en orbite inclinée par rapport à l'équateur magnétique et un générateur de moment magnétique capable de produire un couple de contrôle par interaction avec le champ magnétique, est instationnaire du fait de l'évolution du champ magnétique en axes satellites lorsque ce dernier parcourt son orbite.

L'invention permet de contrôler ledit système instationnaire en fixant avantageusement ses pôles en tout point de l'orbite, donc en lui donnant des caractéristiques dynamiques - telles que la rapidité ou l'amortissement - à volonté en tout point de l'orbite (dans la limite correspondant à la saturation du générateur de moment magnétique, bien sûr).

En particulier, on pourra choisir des pôles constants tout au long de l'orbite.

Les pulsations correspondant aux pôles du système pourront être choisies (non restrictif) au moins quatre fois plus grandes que la pulsation orbitale, et les amortissements correspondants choisis de l'ordre de l'unité.

## Revendications

1. Procédé de contrôle de l'attitude d'un satellite devant être stabilisé selon des axes de roulis, de tangage et de lacet, selon lequel, pour le contrôle en roulis-lacet :

   - on détermine l'orientation instantanée dans le plan roulis-lacet de la direction instantanée $\vec{d}$ définie par le produit vectoriel du vecteur unitaire $\vec{Y}$ de l'axe de tangage avec le champ magnétique terrestre local $\vec{B}$,
   - on détermine des grandeurs d'attitude en roulis-lacet du satellite,
   - on détermine l'amplitude et le sens d'un couple de correction Cmxz à appliquer au satellite selon ladite direction, cette amplitude étant déterminée à partir desdites grandeurs d'attitude en roulis-lacet selon une loi de commande prédéterminée dont les gains sont élaborés de façon adaptative en sorte de respecter des conditions prédéterminées sur les pôles du système modélisant la dynamique du satellite dans le plan roulis-lacet,

-   on génère dans un plan perpendiculaire à cette direction instantanée un moment magnétique d'amplitude propre à générer selon ladite direction ledit couple de correction Cmxz par interaction avec le champ magnétique terrestre, grâce à quoi ce couple de correction du roulis-lacet n'a aucune composante en tangage.

2.  Procédé selon la revendication 1, caractérisé en ce que les conditions prédéterminées sur les pôles du système sont des conditions de sensible constance au cours du temps.

3.  Procédé selon la revendication 1 ou 2, caractérisé en ce que lesdits gains sont élaborés par interpolation à partir de données stockées à bord et d'au moins l'orientation de la composante Bxz du champ magnétique terrestre instantané dans le plan roulis-lacet.

4.  Procédé selon la revendication 1 ou 2, caractérisé en ce que lesdits gains sont élaborés à partir de coefficients de FOURIER stockés à bord et de la valeur instantanée de l'orientation de la composante Bxz du champ magnétique terrestre local dans le plan roulis-lacet.

5.  Procédé selon l'une quelconque des revendications 1 à 4, caractérisé en ce que la loi de commande est du type proportionnel/dérivée, les grandeurs d'attitude sont les angles et les vitesses angulaires en roulis-lacet, et les gains sont au nombre de quatre.

6.  Procédé selon l'une quelconque des revendications 1 à 4, caractérisé en ce que la loi de commande est du type proportionnel/intégral, les grandeurs d'attitude sont les angles en roulis-lacet et leurs intégrales et les gains sont au nombre de quatre.

7.  Procédé selon l'une quelconque des revendications 1 à 4, caractérisé en ce que la loi de commande est du type proportionnel/intégral/dérivée, les grandeurs d'attitude sont les angles en roulis-lacet et leurs vitesses et leurs intégrales, et les gains sont au nombre de six.

8.  Procédé selon l'une quelconque des revendications 1 à 7, caractérisé en ce que les pôles auxquels sont appliquées les conditions prédéterminées sont caractérisés par les grandeurs $\zeta_i$ et $\omega_i$ telles que le polynôme caractéristique du système puisse s'écrire sous la forme d'un produit de $\underline{n}$ termes :

$$x^2 + 2\zeta_i\,\omega_i x + \omega_i^2$$

où i est compris entre 1 (inclus) et n (inclus).

9.  Procédé selon la revendication 8, caractérisé en ce que les pôles sont choisis en sorte que les grandeurs $\omega_i$ sont supérieures d'au moins un ordre de grandeur à la pulsation orbitale.

10. Procédé selon l'une quelconque des revendications 1 à 9, caractérisé en ce qu'on détermine l'amplitude de la composante Bxz et on détermine l'amplitude du moment magnétique, noté My, par division de l'amplitude du couple de correction par cette amplitude de la composante Bxz, et on génère ce moment magnétique My selon l'axe de tangage.

11. Procédé selon l'une quelconque des revendications 1 à 9, caractérisé en ce qu'on détermine l'amplitude |B| du champ magnétique terrestre B, et on génère le moment magnétique, noté Mb, perpendiculairement au champ magnétique terrestre, tel que :

$$Mb = \frac{B \wedge Cmxz}{|B|^2}$$

12. Procédé selon l'une quelconque des revendications 1 à 11, caractérisé en ce qu'en outre on contrôle l'attitude en tangage par modification de la vitesse de rotation d'une roue d'inertie en tangage.

13. Procédé selon la revendication 12, caractérisé en ce qu'on génère des couples en tangage de désaturation de la roue d'inertie par activation d'au moins un générateur de moment magnétique générant un moment magnétique dans le plan roulis-lacet.

14. Procédé selon l'une quelconque des revendications 1 à 11, caractérisé en ce qu'on contrôle l'attitude en tangage par génération dans le plan roulis-lacet d'un moment magnétique d'amplitude déterminée en fonction des mesures d'attitude en tangage.

15. Procédé selon la revendication 13 ou la revendication 14, caractérisé en ce qu'on génère ce moment magnétique dans le plan roulis-lacet selon ladite direction instantanée.

16. Procédé selon l'une quelconque des revendications 1 à 15, caractérisé en ce que l'on détermine les grandeurs d'attitude par détection à l'aide de détecteurs terrestre, solaire et/ou stellaire, de gyroscopes ou de gyromètres, et/ou estimation à l'aide de filtres estimateurs.

17. Procédé selon l'une quelconque des revendications 1 à 15, caractérisé en ce qu'on détermine certaines au moins des grandeurs d'attitude par comparaison de mesures, selon un ou plusieurs axes, du champ magnétique terrestre instantané avec un modèle de ce champ magnétique terrestre.

18. Procédé selon l'une quelconque des revendications 1 à 17, caractérisé en ce qu'on détermine le champ magnétique terrestre au moins en roulis-lacet par mesure à l'aide d'au moins un magnétomètre à un ou plusieurs axes de mesure.

19. Procédé selon l'une quelconque des revendications 1 à 17, caractérisé en ce qu'on détermine au moins l'orientation du champ magnétique terrestre en roulis-lacet à partir de signaux reçus du sol.

20. Procédé selon l'une quelconque des revendications 1 à 17, caractérisé en ce qu'on détermine au moins l'orientation du champ magnétique terrestre local en roulis-lacet à partir d'un modèle de ce champ.

21. Procédé selon l'une quelconque des revendications 1 à 20, caractérisé en ce que le satellite suit une orbite d'inclinaison comprise entre 15° et 75° environ.

22. Satellite stabilisé en roulis, en tangage et en lacet, comportant un dispositif de contrôle d'attitude en roulis-lacet comportant :

-   un premier dispositif de détermination d'au moins l'orientation du champ magnétique terrestre local instantané en roulis-lacet Bxz,
-   un deuxième dispositif de détermination d'attitude pour fournir des signaux d'attitude au moins en roulis et en lacet,
-   un générateur de moment cinétique, et
-   un calculateur connecté aux premier et second dispositifs et au générateur de moment cinétique, caractérisé en ce que :

    *   le calculateur contient une loi de commande adaptative à gains variables donnant une valeur de couple de correction en roulis/lacet à appliquer perpendiculairement à l'axe de tangage et à l'orientation instantanée de Bxz à partir des signaux d'attitude, et une loi donnant lesdits gains variables en fonction d'au moins l'orientation de Bxz, et
    *   le générateur de moment magnétique est adapté à générer dans le plan de l'axe de tangage et de Bxz un moment magnétique propre à générer par interaction avec le champ magnétique terrestre ladite valeur de couple à appliquer.

23. Satellite stabilisé selon la revendication 22, caractérisé en ce que le satellite comporte en outre un système de contrôle d'attitude en tangage comportant une roue d'inertie en tangage à vitesse variable.

24. Satellite stabilisé selon la revendication 23, caractérisé en ce que le système de contrôle d'attitude en tangage comporte un générateur de moment magnétique en roulis-lacet adapté à générer avec la composante en roulis-lacet du champ magnétique terrestre un couple de désaturation en tangage.

25. Satellite stabilisé selon la revendication 22, caractérisé en ce que le dispositif de contrôle d'attitude en roulis-lacet fait partie d'un dispositif de contrôle d'attitude en roulis, tangage et lacet, le calculateur contenant en outre une loi de contrôle d'attitude en tangage déterminant un couple de contrôle d'attitude en tangage, et le générateur de moment magnétique étant adapté à générer un moment magnétique engendrant, par interaction avec le champ magnétique terrestre, le couple de correction en roulis-lacet et le couple de correction en tangage.

## Claims

1. Method of controlling the attitude of a satellite to be stabilized about roll, pitch and yaw axes wherein, for roll-yaw control:

   - the instantaneous orientation in the roll-yaw plane of the instantaneous direction $\vec{d}$ defined by the vector product of the unit vector $\vec{Y}$ of the pitch axis and the local terrestrial magnetic field $\vec{B}$ is determined,
   - the roll-yaw attitude parameters of the satellite are determined,
   - the amplitude and the direction of a correction torque Cmxz to be applied to the satellite in said direction are determined, said amplitude being determined from said roll-yaw attitude parameters using a predetermined control law the gains of which are adaptive in order to comply with predetermined conditions on the poles of the system modelling the dynamics of the satellite in the roll-yaw plane,
   - a magnetic moment is generated in a plane perpendicular to this instantaneous direction having an amplitude adapted to generate in said direction said correction torque Cmxz by interaction with the terrestrial magnetic field, so that this roll-yaw correction torque has no pitch component.

2. Method according to claim 1 characterized in that the predetermined conditions on the poles of the system are conditions of substantial time-invariance.

3. Method according to claim 1 or claim 2 characterized in that said gains are produced by interpolation on the basis of data stored on board and at least the orientation of the component Bxz of the instantaneous terrestrial magnetic field in the roll-yaw plane.

4. Method according to claim 1 or claim 2 characterized in that said gains are produced from FOURIER coefficients stored on board and from the instantaneous value of the orientation of the component Bxz of the local terrestrial magnetic field in the roll-yaw plane.

5. Method according to any one of claims 1 to 4 characterized in that the control law is of the proportional/derivative type, the attitude parameters are the roll-yaw angles and angular speeds and there are four gains.

6. Method according to any one of claims 1 to 4 characterized in that the control law is of the proportional/integral type, the attitude parameters are the roll-yaw angles and their integrals and there are four gains.

7. Method according to any one of claims 1 to 4 characterized in that the control law is of the proportional/integral/derivative type, the attitude parameters are the roll-yaw angles and their speeds and their integrals and there are six gains.

8. Method according to any one of claims 1 to 7 characterized in that the poles to which the predetermined conditions are applied are characterized by the parameters $\zeta_i$ and $\omega_i$ such that the characteristic polynomial of the system can be written in the form of a product of $\underline{n}$ terms:

$$x^2 + 2\xi_i \, \omega_i x + \omega_i^2$$

   where i is between 1 and n (inclusive).

9. Method according to claim 8 characterized in that the poles are chosen so that the parameters $\omega_i$ are at least one order of magnitude greater than the orbital angular frequency.

10. Method according to any one of claims 1 to 9 characterized in that the amplitude of the component Bxz is determined and the amplitude of the magnetic moment My is determined by dividing the amplitude of the correction torque by the amplitude of the component Bxz and the magnetic moment My is generated on the pitch axis.

11. Method according to any one of claims 1 to 9 characterized in that the amplitude |B| of the terrestrial magnetic field B is determined and the magnetic moment Mb is generated perpendicularly to the terrestrial magnetic field such

that:

$$Mb = \frac{B \wedge Cmxz}{|B|^2}$$

12. Method according to any one of claims 1 to 11 characterized in that attitude is controlled in pitch by modifying the rotation speed of a pitch momentum wheel.

13. Method according to claim 12 characterized in that torques are generated in pitch to desaturate the momentum wheel by activating at least one magnetic moment generator generating a magnetic moment in the roll-yaw plane.

14. Method according to any one of claims 1 to 11 characterized in that the attitude is controlled in pitch by generating a magnetic moment in the roll-yaw plane having an amplitude determined according to measured pitch attitude values.

15. Method according to claim 13 or claim 14 characterized in that said magnetic moment is generated in the roll-yaw plane in said instantaneous direction.

16. Method according to any one of claims 1 to 15 characterized in that the attitude parameters are determined by sensing using Earth, sun and/or star sensors, gyroscopes or rate gyroscopes and/or are estimated using estimator filters.

17. Method according to any one of claims 1 to 15 characterized in that at least some of the attitude parameters are determined by comparing measured values of the instantaneous terrestrial magnetic field along one or more axes with a model of the terrestrial magnetic field.

18. Method according to any one of claims 1 to 17 characterized in that the terrestrial magnetic field is determined at least in roll-yaw by measurement using at least one magnetometer with one or more measurement axes.

19. Method according to any one of claims 1 to 17 characterized in that at least the orientation of the terrestrial magnetic field in roll-yaw is determined from signals received from the ground.

20. Method according to any one of claims 1 to 17 characterized in that at least the orientation of the local terrestrial magnetic field in roll-yaw is determined from a model of the field.

21. Method according to any one of claims 1 to 20 characterized in that the satellite is in an orbit inclined at between about 15° and 75°.

22. Satellite stabilized in roll, pitch and yaw including a device for controlling its attitude in roll-yaw including:

- a first device for determining at least the orientation of the instantaneous local terrestrial magnetic field Bxz in roll-yaw,
- an attitude-determining second device for supplying attitude signals at least in roll and in yaw,
- a moment of inertia generator, and
- a computer connected to the first and second devices and to the moment of inertia generator, characterized in that:

* the computer implements an adaptive control law with variable gains giving a value of correction torque in roll/yaw to be applied perpendicular to the pitch axis and to the instantaneous orientation of Bxz from the attitude signals and a law giving said variable gains as a function of at least the orientation of Bxz, and
* the magnetic moment generator is adapted to generate in the plane of the pitch axis and of Bxz a magnetic moment adapted to generate said value of torque to be applied by interaction with the terrestrial magnetic field.

23. Stabilized satellite according to claim 22 characterized in that the satellite further includes a pitch attitude control system including a variable speed pitch momentum wheel.

**24.** Stabilized satellite according to claim 23 characterized in that the pitch attitude control system includes a roll-yaw magnetic moment generator adapted to generate a pitch desaturation torque by interaction with the roll-yaw component of the terrestrial magnetic field.

**25.** Stabilized satellite according to claim 22 characterized in that the roll-yaw attitude control device is part of a roll, pitch and yaw attitude control device, the computer further implementing a pitch attitude control law determining a pitch attitude control torque and the magnetic moment generator being adapted to generate a magnetic moment generating the roll-yaw correction torque and the pitch correction torque by interaction with the terrestrial magnetic field.

**Patentansprüche**

**1.** Lageregelungsverfahren für einen Satelliten, der gemäß der Roll-, Nick- und Gierachse stabilisiert werden muß, gemaß dem für die Regelung bezüglich der Roll- und der Gierachse:

- die momentane Ausrichtung der momentanen Richtung $\vec{d}$, die durch das Vektorprodukt des Einheitsvektors $\vec{Y}$ der Nickachse mit dem örtlichen Erdmagnetfeld $\vec{B}$ definiert ist, in der Roll- und Gierebene bestimmt wird,
- die Größen der Lage des Satelliten bezüglich der Roll- und der Gierachse bestimmt werden,
- die Amplitude und die Richtung eines Korrekturdrehmoments Cmxz, das gemäß der Richtung an den Satelliten angelegt werden muß, bestimmt wird, wobei diese Amplitude ausgehend von den Größen der Lage gemäß der Roll- und der Gierachse nach einem vorgegebenen Regelungsgesetz bestimmt wird, dessen Verstärkungsfaktoren adaptiv ausgearbeitet werden, so daß die vorgegebenen Bedingungen auf den Polen des Systems eingehalten werden, wobei die Dynamik des Satelliten in der Roll- und Gierebene modelliert wird,
- in einer Ebene, die senkrecht zu dieser momentanen Richtung ist, ein Magnetmoment erzeugt wird, dessen Amplitude geeignet ist, gemäß der Richtung das Korrekturdrehmoment Cmxz durch Wechselwirkung mit dem Erdmagnetfeld zu erzeugen, wodurch dieses Roll- und Gierachsenkorrekturdrehmoment keine Komponente gemäß der Nickachse aufweist.

**2.** Verfahren nach Anspruch 1, dadurch gekennzeichnet, daß die vorgegebenen Bedingungen auf den Polen des Systems Bedingungen sind, die im wesentlichen im Verlauf der Zeit konstant sind.

**3.** Verfahren nach Anspruch 1 oder 2, dadurch gekennzeichnet, daß die Verstärkungsfaktoren durch Interpolation ausgehend von an Bord gespeicherten Daten und von mindestens der Ausrichtung der Komponente Bxz des momentanen Erdmagnetfelds in der Roll- und Gierebene ausgearbeitet werden.

**4.** Verfahren nach Anspruch 1 oder 2, dadurch gekennzeichnet, daß die Verstärkungsfaktoren ausgehend von an Bord gespeicherten FOURIER-Koeffizienten und vom momentanen Wert der Ausrichtung der Komponente Bxz des lokalen Erdmagnetfeldes in der Roll- und Gierebene ausgearbeitet werden.

**5.** Verfahren nach mindestens einem der Ansprüche 1 bis 4, dadurch gekennzeichnet, daß das Regelungsgesetz ein Proportional-Differential-Regelungsgesetz ist, wobei die Größen der Lage die Winkel und die Winkelgeschwindigkeiten gemäß der Roll- und Gierachse sind und vier Verstärkungsfaktoren vorhanden sind.

**6.** Verfahren nach mindestens einem der Ansprüche 1 bis 4, dadurch gekennzeichnet, daß das Regelungsgesetz ein Proportional-Integral-Regelungsgesetz ist, wobei die Größen der Lage die Winkel gemäß der Roll- und der Gierachse und ihre Integrale sind und es vier Verstärkungsfaktoren gibt.

**7.** Verfahren nach mindestens einem der Ansprüche 1 bis 4, dadurch gekennzeichnet, daß das Regelungsgesetz ein Proportional-Integral-Differential-Regelungsgesetz ist, wobei die Größen der Lage die Winkel gemäß der Roll- und der Gierachse und ihre Geschwindigkeiten und ihre Integrale sind und es sechs Verstärkungsfaktoren gibt.

**8.** Verfahren nach mindestens einem der Ansprüche 1 bis 7, dadurch gekennzeichnet, daß die Pole, an die die vorgegebenen Bedingungen angelegt werden, durch die Größen $\zeta_i$ und $\omega_i$ gekennzeichnet sind, so daß das charakteristische Polynom des Systems in Form eines Produktes aus $\underline{n}$ Termen geschrieben werden kann:

$$x^2 + 2\zeta_i \omega_i x + \omega_i{}^2$$

wobei i zwischen 1 (einschließlich) und n (einschließlich) liegt.

9. Verfahren nach Anspruch 8, dadurch gekennzeichnet, daß die Pole so ausgewählt sind, daß die Größen $\omega_i$ um mindestens eine Größenordnung größer sind als die Orbitalfrequenz.

10. Verfahren nach mindestens einem der Ansprüche 1 bis 9, dadurch gekennzeichnet, daß die Amplitude der Komponente Bxz bestimmt wird und die Amplitude des Magnetmoments, mit My bezeichnet, durch Division der Amplitude des Korrekturdrehmoments durch diese Amplitude der Komponente Bxz bestimmt wird und dieses Magnetmoment My gemäß der Nickachse erzeugt wird.

11. Verfahren nach mindestens einem der Ansprüche 1 bis 9, dadurch gekennzeichnet, daß die Amplitude |B| des Erdmagnetfeldes B bestimmt wird und das Magnetmoment, mit Mb bezeichnet, senkrecht zum Erdmagnetfeld erzeugt wird, so daß:

$$Mb = \frac{B \wedge Cmxz}{|B|^2}$$

12. Verfahren nach mindestens einem der Ansprüche 1 bis 11, dadurch gekennzeichnet, daß außerdem die Lage bezüglich der Nickachse durch Modifikation der Rotationsgeschwindigkeit eines Trägheitsrads gemäß der Nickachse geregelt wird.

13. Verfahren nach Anspruch 12, dadurch gekennzeichnet, daß Drehmomente zur Entsättigung des Trägheitsrads in Nickrichtung durch Aktivierung mindestens eines Magnetdrehmomenterzeugers erzeugt werden, der ein Magnetmoment in der Roll-Gierebene erzeugt.

14. Verfahren nach mindestens einem der Ansprüche 1 bis 11, dadurch gekennzeichnet, daß die Lage gemäß der Nickachse durch Erzeugung eines Magnetmoments mit einer Amplitude, die als Funktion von Lagemessungen gemäß der Nickachse bestimmt wird, in der Roll-Gierebene geregelt wird.

15. Verfahren nach Anspruch 13 oder 14, dadurch gekennzeichnet, daß dieses Magnetmoment in der Roll-Gierebene gemäß der momentanen Richtung erzeugt wird.

16. Verfahren nach mindestens einem der Ansprüche 1 bis 15, dadurch gekennzeichnet, daß die Größen der Lage durch Detektion mit Hilfe von Erd-, Solar- und/oder Stellarsensoren, von Gyroskopen oder Gyrometern und/oder durch Schätzung mit Hilfe von Schätzungsfiltern bestimmt werden.

17. Verfahren nach mindestens einem der Ansprüche 1 bis 15, dadurch gekennzeichnet, daß zumindest bestimmte der Größen der Lage durch Vergleich von Messungen des momentanen Erdmagnetfeldes gemäß einer oder mehreren Achsen mit einem Modell dieses Erdmagnetfeldes bestimmt werden.

18. Verfahren nach mindestens einem der Ansprüche 1 bis 17, dadurch gekennzeichnet, daß das Erdmagnetfeld zumindest gemäß der Roll- und Gierachse durch Messung mit Hilfe mindestens eines Magnetometers mit einer oder mehreren Meßachsen bestimmt wird.

19. Verfahren nach mindestens einem der Ansprüche 1 bis 17, dadurch gekennzeichnet, daß zumindest die Ausrichtung des Erdmagnetfeldes gemäß der Roll- und der Gierachse ausgehend von Signalen bestimmt wird, die vom Boden empfangen werden.

20. Verfahren nach mindestens einem der Ansprüche 1 bis 17, dadurch gekennzeichnet, daß zumindest die Ausrichtung des lokalen Erdmagnetfeldes gemäß der Roll- und der Gierachse ausgehend von einem Modell dieses Feldes bestimmt wird.

21. Verfahren nach mindestens einem der Ansprüche 1 bis 20, dadurch gekennzeichnet, daß der Satellit einem Orbit folgt, das eine Neigung von etwa 15° bis etwa 75° aufweist.

22. Satellit, der gemäß der Roll-, der Nick- und der Gierachse stabilisiert ist und eine Lageregelungsvorrichtung gemäß der Roll- und der Gierachse aufweist, die folgendes aufweist:

- eine erste Vorrichtung zur Bestimmung zumindest der Ausrichtung des momentanen lokalen Erdmagnetfeldes gemäß der Roll- und der Gierachse Bxz,

- eine zweite Vorrichtung zur Bestimmung der Lage, um Lagesignale zumindest gemäß der Roll- und der Gierachse zu liefern,
- einen Erzeuger kinetischer Momente und
- einen Rechner, der mit der ersten und der zweiten Vorrichtung und mit dem Erzeuger kinetischer Momente verbunden ist, dadurch gekennzeichnet, daß:

  * der Rechner ein adaptives Regelungsgesetz mit variablen Verstärkungsfaktoren, das ausgehend von Lagesignalen einen Wert für ein Korrekturdrehmoment gemäß der Roll- und der Gierachse liefert, das senkrecht zur Nickachse und zur momentanen Orientierung Bxz anzulegen ist, und ein Gesetz enthält, das die variablen Verstärkungsfaktoren als Funktion mindestens der Ausrichtung von Bxz liefert, und
  * der Magnetmomenterzeuger dafür ausgelegt ist, in der Ebene der Nickachse und Bxz ein Magnetmoment zu erzeugen, das geeignet ist, durch Wechselwirkung mit dem Erdmagnetfeld den Wert des anzulegenden Drehmoments zu erzeugen.

23. Stabilisierter Satellit nach Anspruch 22, dadurch gekennzeichnet, daß der Satellit außerdem ein Lageregelungssystem gemäß der Nickachse aufweist, das ein Trägheitsrad gemäß der Nickachse mit variabler Geschwindigkeit aufweist.

24. Stabilisierter Satellit nach Anspruch 23, dadurch gekennzeichnet, daß das Lageregelungssystem gemäß der Nickachse einen Magnetmomenterzeuger gemäß der Roll- und der Gierachse aufweist, der dafür ausgelegt ist, mit der Komponente des Erdmagnetfeldes gemäß der Roll- und Gierachse ein Entsättigungsdrehmoment gemäß der Nickachse zu erzeugen.

25. Stabiliserter Satellit nach Anspruch 22, dadurch gekennzeichnet, daß die Lageregelungsvorrichtung gemäß der Roll- und der Gierachse Teil einer Lageregelungsvorrichtung gemäß der Roll-, Nick- und Gierachse ist, wobei der Rechner außerdem ein Lageregelungsgesetz gemäß der Nickachse enthält, das ein Lageregelungsdrehmoment gemäß der Nickachse bestimmt und wobei der Magnetmomenterzeuger dafür ausgelegt ist, ein Magnetmoment zu erzeugen, das durch Wechselwirkung mit dem Erdmagnetfeld das Korrekturdrehmoment gemäß der Roll- und der Gierachse und das Korrekturdrehmoment gemäß der Nickachse zu erzeugt.

Fig.1

$\vec{B}$ →

| Système de détermination du champ | 1 |

$\alpha, |Bxz|$

| loi de contrôle adaptative en fonction du champ | 2 |

| Système de détermination d'attitude | 3 |

$\varphi, \theta, \psi$
$\dot{\varphi}, \dot{\theta}, \dot{\psi}$

$C_{consigne}$

| générateur de moment magnétique | 4 |

Mb

| loi de la physique " C = M Λ B " | 5 |

$C_{réel}$

| Dynamique du satellite | 6 |

Couples perturbateurs

B

Fig. 2

Fig.3

EP 0 671 323 B1

**Gain roulis**

k1

**Gain vitesse de roulis**

$l_1$

**Gain lacet**

$k_2$

**Gain vitesse de lacet**

$l_2$

Fig.4

Fig.5

Fig.6

Fig.8

Fig.7

23